(19) **Europäisches Patentamt / European Patent Office / Office européen des brevets**

(11) **EP 4 056 538 A1**

(12) # EUROPEAN PATENT APPLICATION

(43) Date of publication:
**14.09.2022 Bulletin 2022/37**

(21) Application number: **21161152.0**

(22) Date of filing: **07.03.2021**

(51) International Patent Classification (IPC):
***C04B 20/10*** *(2006.01)*

(52) Cooperative Patent Classification (CPC):
(C-Sets available)
**C04B 20/1077** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **National Centre for Scientific Research "Demokritos"**
**15341 Agia Paraskevi (GR)**

(72) Inventors:
- **KARATASIOS, IOANNIS**
  **15772 ATHENS (GR)**
- **PAPAIOANNOU, STAMATOULA**
  **11635 ATHENS (GR)**
- **AMENTA, MARIA**
  **15771 ATHENS (GR)**
- **GOURNIS, DIMITRIOS**
  **45500 IOANNINA (GR)**
- **KILIKOGLOU, VASSILIOS**
  **15238 ATHENS (GR)**

(74) Representative: **Kosti, Vasiliki**
**Kladeou 8**
**26442 Patra (GR)**

(54) **ENCAPSULATED SYSTEMS FOR THE DEVELOPMENT OF SELF- HEALING BUILDING MATERIALS**

(57) The present invention relates to a novel method for the production of an encapsulated system for the self-healing of cracks formed within the matrix of building materials, preferably cementitious materials, such as concrete or mortar. Further, the invention refers to a novel encapsulated system comprising a cement- based active core and a cement-based protective shell, and to the use of said encapsulated system for the self- healing of cementitious materials such as concrete or mortar.

**FIGURE 1**

EP 4 056 538 A1

(52) Cooperative Patent Classification (CPC): (Cont.)

C-Sets
**C04B 20/1077, C04B 20/123**

## Description

FIELD OF THE INVENTION

The present invention relates to encapsulated systems and their application in the development of self-healing building materials, such as cement-based mortars, concrete and hydraulic mortars. Further, the invention relates to a method of manufacture of such self-healing systems

BACKGROUND

Cement is a material broadly used as a binder in construction, as it hardens and adheres to other materials in order to bind them together. Normally, cement is either mixed with fine aggregates to produce grout and mortar for masonry, or with sand and gravel in order to produce concrete.

Concrete is the most used construction material as it is mechanically strong, rather inexpensive and presents a high degree of durability. However, concrete is a porous, brittle material, susceptible to internal damage and cracks due to freeze-thaw cycles and other external forces during its service. Crack formation is the primary reason for premature corrosion deterioration which leads to limitations in the durability of concrete structures. Larger cracks as well as a network of finer cracks allow water, oxygen, chloride, and other aggressive corroding substances to penetrate the concrete matrix, compromising the durability of the structure and thus costly measures of maintenance and repair need to be undertaken. When such cracks are not restored timely and effectively, brittle fracture and reinforcement corrosion are triggered, while concrete becomes susceptible e.g. to biological attack. Such phenomena lead to shortened concrete life and safety concerns for the structure.

Therefore, timely repair of cracks is a major concern.

In order to address such issues and, thus, to improve the durability and safety of concrete structures, a great attention is directed to concrete materials with self-healing properties. Such a material incorporates a self-response mechanism which has the ability to repair internal damage and cracks generated during the use of concrete. In the prior art, several self-healing techniques are available. These techniques mainly include: use of self-healing additives in the form of mineral or crystalline admixtures, which are added in various dosages with the cement (Wang et al; Cement and Concrete Composites; 2018, 92: 216-229); use of calcite produced as a metabolism result of bacteria which are added into the concrete along with an appropriate nutrient solution (Krishnapriya et al; Microbiological Research; 2015, 174:48-55); use of glass-based capsules containing a liquid healing agent, which are placed in the hardened concrete mix (Qureshi et al; Construction and building materials; 2016, 121: 629-643); use of polymeric tubes containing a liquid healing agent, which are added in the concrete mix (Hilloulin et al; Cement and Concrete Composites; 2015, 55:298-307); use of self-healing agents in nano- and microcapsules embedded in the concrete (Kanellopoulos et al; Smart materials and Structures; 2017, 26); and use of vascular networks which consist of macro-scale tubes (Minnebo et al; Materials; 2017, 10(1):49. Li et al; Materials & Design; 2020, 190). The mineral or crystalline admixtures usually have a good repair effect on microcracks, but self-healing can be carried out only in a humid environment. Moreover, the lack of an external protective shell/layer leads to the gradual consumption of the crystalline admixtures, due to their reactivity with water and the associated hydration reactions. Therefore, they have limited service-life compared to encapsulated healing agents and are not suitable for providing long-term healing efficiency. Bacteria based self-healing systems also function in a humid environment and the bacteria have a short survival period in highly alkaline concrete. Besides, bacteria and nutrients must be distributed within cement in such a way that the bacteria have access to them through the porosity network. In the course of time, such an access becomes restricted as after prolonged cement curing, cement pores are reduced in size and amount. Thus, a number of bacteria is eliminated by mechanical pressure (squeezed) and the access to the nutrients is blocked. They are a two-component system with a limited service-life for providing long-term healing efficiency. In terms of market potential/transport, bacteria are not always easily tradable within different countries, since they are considered as potential biological hazards. Glass-based capsules are usually in the form of macro-scale tubes, in the range of few centimetres, containing a liquid healing agent in large amounts. They cannot be incorporated/mixed with cement and aggregate during the mixing process of the wet mixture, which means that their even distribution in the hardened cement in is not feasible due to glass brittleness. Thus, they need be placed one-by-one in the appropriate position. This is a highly time-consuming process, inappropriate for routine and large-scale applications. The glass shell provides limited adhesion to cement matrix and reduces the mechanical properties of hardened cement and concrete. In case of damage, the healing action cannot be localized in the damage area, due to the mobility/liquid nature of the healing agent. Therefore, part of the healing agent is wasted. Moreover, in the case of expansive healing agents like polyurethane, the expansion of excess amount of healing agent may lead to further crack opening/damage of concrete and/or waste of the healing material. Overall, the correct dosage of the healing agent cannot be controlled. Polymeric tubes are available in different forms, shapes and sizes in the macro-scale (3-10 cm). Their main disadvantages are the limited adhesion of the polymers to the cement matrix, as well as the insufficient protection of the healing agent due to leakage or limited water-tightness. In many cases, there are leakages or consumption of the healing agent during mixing and hardening of cement. In the case of nano- and micro-capsules, their chemical synthesis limits the size of the produced capsules and thus the available amount/volume of healing agent, which becomes very low. This means that a larger number of capsules needs to be added in the cement for an effective healing effect, which further affects negatively the mechanical properties of the cement mixtures. Moreover, the requirement for water is increased leading to altered microstructure and porosity. In the case of micro-capsules, an additional step is required before mixing with cement, aiming to produce a liquid slurry. This increases the time, effort and cost required for preparing the final self-healing cement mixture. The polymer shell of the capsules has low strength and does not provide the strong adhesion that is necessary, in order to get crashed or raptured under flexural tension, while the crack goes around the capsule. Finally, vascular networks need to be designed and installed during the construction process of a structure. They require high expertise, elevated installation cost, continuous monitoring, while they are consumed at once, when damage occurs. They form an installation solution and are not an easily tradable, cement-based product. This approach entails extensive design requirements for the concrete structures and a special construction technique is needed in order to be incorporated in the structure. These factors increase the cement cost and the budget of the constructions. Therefore, there is an unmet need to provide cement and concrete compositions with self-healing behaviour, which can efficiently overcome all the above-mentioned drawbacks of the state of the art.

SUMMARY

The present disclosure refers to encapsulated systems with self-healing properties, and their use(s) in the development of building materials with the ability of self-healing in the case of the materials' degradation; moreover, it further relates to a new method of production of systems for self-healing of building materials.

In one embodiment, the present disclosure provides a capsule comprising a core and a shell, characterised in that said core comprises an inner core (1) containing cement and an outer stabilisation layer made of cement (2), and in that said shell comprises an outer layer (4) containing a cement and sodium silicate mixture, and an inner layer (3) containing cement and forming the main body of the shell.

In one embodiment said capsule comprises a core and a shell characterised in that said core comprises an inner core (1) containing ordinary Portland cement (OPC) or belite calcium sulfo aluminate cement (BCSA) or mixtures thereof, and crystalline admixtures, and/ or CaO, and/or MgO and/or a super plasticizer (SP) preferably polycarboxylate, and an outer stabilisation layer made of cement, and crystalline admixtures, and/or CaO, and/or MgO and/or super plasticizer (SP), preferably polycarboxylate (2), and in that said shell comprises an outer layer (4) containing cement and sodium silicate, and an inner layer (3) containing cement and forming the main body of the shell.

In one embodiment said capsule is added in a concrete material providing a self-healing property.

In one embodiment said capsule is activated when a crack is formed in the concrete releasing said core healing agents and providing for self-healing of the concrete material. In another embodiment the present disclosure provides a method of production of an encapsulated system for the development of self-healing materials.

In one embodiment said method comprises (i) preparing a cement-based capsule core, and (ii) encapsulating said core with a protective shell comprising cement.

BRIEF DESCRIPTION OF THE DRAWINGS

**Figure 1** depicts a self-healing, cement-based capsule system in section. The capsule comprises a capsule shell and a capsule core. The capsule core comprises an inner core (1) made of OPC or BCSA or mixtures thereof, and crystalline admixtures, and/or CaO, and/or MgO, and and/or a SP, and an outer stabilization layer made of hydrated cement (2). The capsule shell comprises an outer capsule layer (4), composed of a cement and sodium silicate and, an inner capsule layer that forms the main body of the shell, composed of cement (3).

**Figure 2 (A-C).** Stereo-microscope images of representative capsules of C1 (Fig. 2A) and C2 (Fig. 2B) batches. Fig. 2C shows the size distribution of C1 and C2 capsules (sample size, n=300).

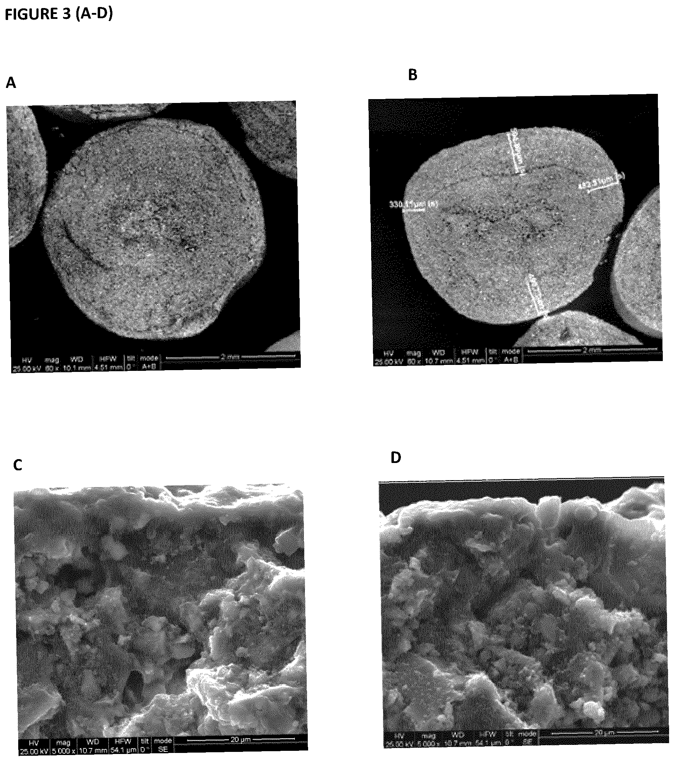

**Figure 3 (A-D).** Fig. 3A and 3B are scanning electron microscope (SEM) images of a C1 capsule (A) and a C2 capsule (B) respectively, in cross-section, depicting the shape, the core and the shell of the capsule. Fig. 3C and Fig. 3D are scanning electron images of capsule C1 (C) and capsule C2 (D) respectively, showing the different microstructure and morphology of the external/outer layer of the shell, due to the reaction with sodium silicate. Picture (D) indicates the beneficial role of sodium silicate in capsules C2, forming a denser microstructure that differentiates the shell from the core.

**Figure 4 (A-C).** Figures 4A and 4B depict the microstructure of the C1 and C2 cores in a fractured section after their formation, indicating the micromorphology of the non-reacted or non-hydrated OPC, especially when compared to the Figure 4C that depicts the morphology of the hydrated core.

**Figure 5.** Thermogravimetric analysis curves of the C1 and C2 cores' material at different stages, indicating the weight loss at different temperatures due to de-hydration and de-hydroxylation reactions.

Compared to the reference OPC core, in both processes (C1 and C2) the hydration of the cores in the produced capsules is very limited. The higher the difference between 30-1000 °C the more hydrated the core.

**Figure 6.** Schematic illustration of the crushing strength test

**Figure 7 (A-B).** Graphs showing the crushing load (A) and (B) survivability during the mixing process, for capsules C1, C2 and C3.

**Figure 8.** Effect of capsules' type and concentration on rheology as expressed by the flow

table values of cement mixtures. The graph depicts that the incorporation of a capsules' volume up to 20 % of the total amount of aggregates, by replacing each time equal volume of aggregates has negligible effect on the rheology of the cement mixture.

**Figure 9.** Distribution coefficient of varying volume fractions (5 - 20 % as partial replacement of sand by volume) of C1 and C2 capsules incorporated in the cement matrix.

In all mixtures, when the % of capsules' volume is below 20%, the distribution coefficient is between 0.5-0.65. When the number of capsules in the cement mixture is 20 % the value of distribution coefficient is about 0.8, indicating that capsules are distributed more uniformly all over the specimen. The distribution is acceptable when the distribution coefficient is above 0.5 and becomes better when approaches the value 1.

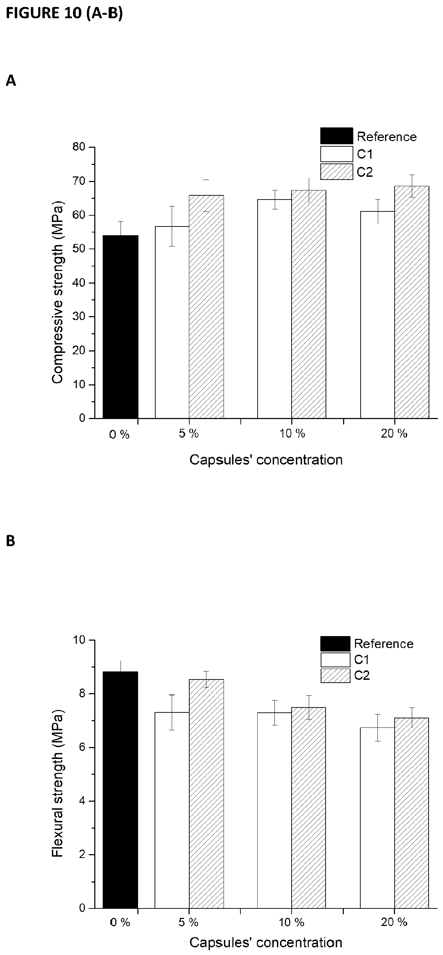

**Figure 10 (A-B).** Effect of capsules' concentration on compressive strength (A) and bending strength (B) of cement specimens cured for 28 days under water. The compressive strength was increased with the addition of capsules. It is the addition of capsules that increases the packing density of the system, acting beneficially for the compressive strength. In contrast, the bending strength is slightly decreased at all concentrations of C1 capsules, while in the case of C2 the bending strength is decreased when the amount of capsules is above 5%, indicating again the beneficial role of elevated shell strength of C2.

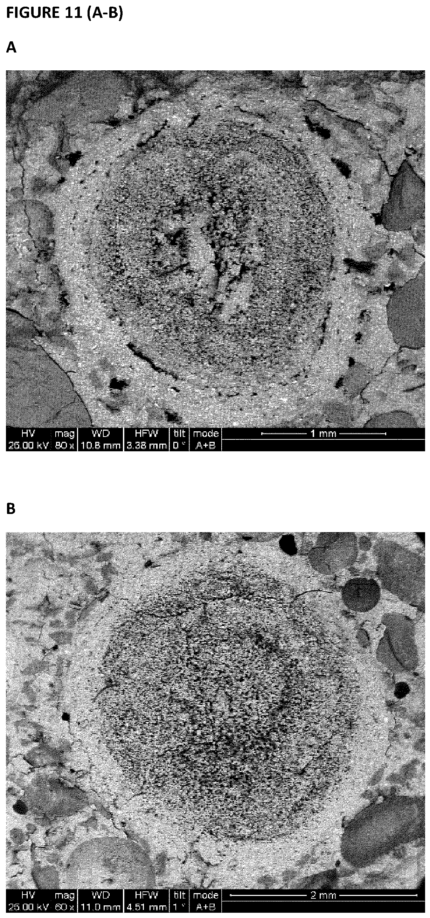

**Figure 11 (A-B).** Fractured sections of cement specimens in SEM, created by crack propagation during bending. The pictures indicate the sectioned/fractured C1 (A) and C2 (B)capsules that was embedded in the cement specimens. The pictures are a proof that the crack can damage the capsules during crack propagation, thus effectively activate the healing agent.

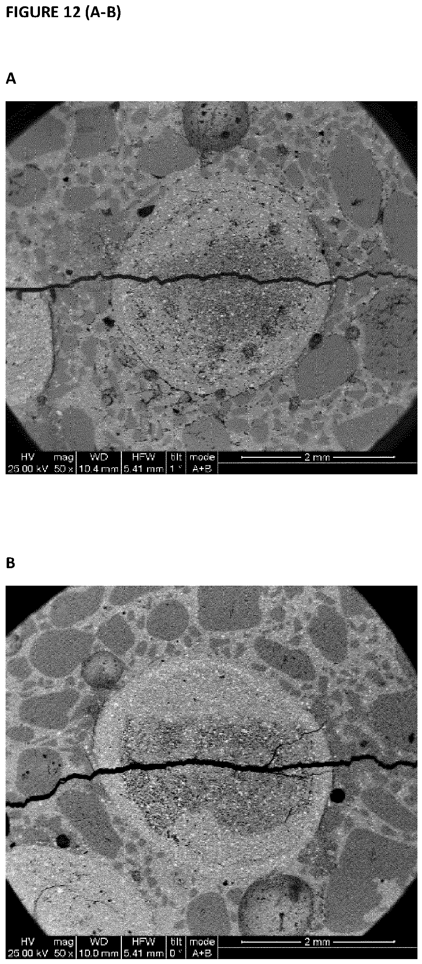

**Figure 12 (A-B).** Cross and polished sections of resin mounted damaged specimens with embedded C1 (A) and C2 (B) capsules in SEM. The good adhesion between the shell of the capsules and the cement matrix resulted in efficient activation of both types of capsules during crack propagation.

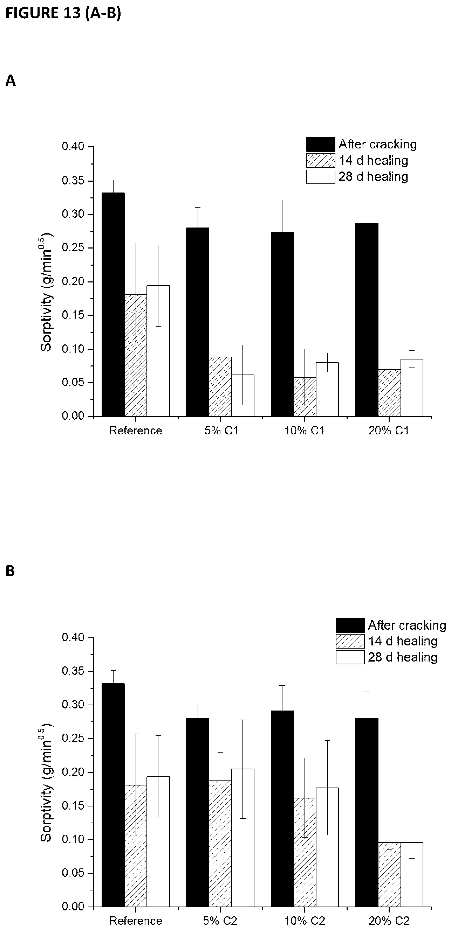

**Figure 13 (A-B).** Sorptivity of cracked specimens containing C1 (A) and C2 (B) capsules at different volumetric fractions, compared with cracked cement specimens (black bars). The addition of C1 capsules, even in 5 %, has a beneficial role on the healing efficiency of the cement mortar, while regarding C2 capsules, enhancement of the healing efficiency was achieved when 20 % of capsules was added.

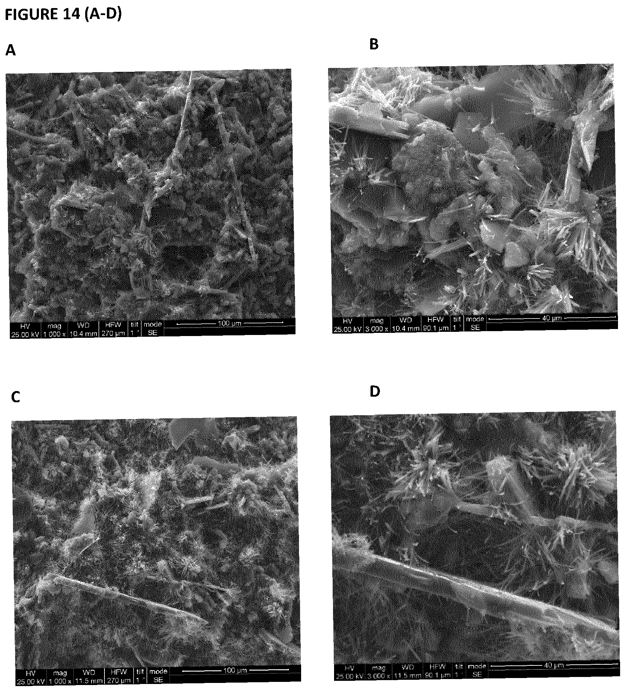

**Figure 14 (A-D)** Morphology of the healing products formed in the core of ruptured capsules (Fig. A, B, core of C1 capsules, Fig. C, D, core of C2 capsules) after 1 month healing period under water.

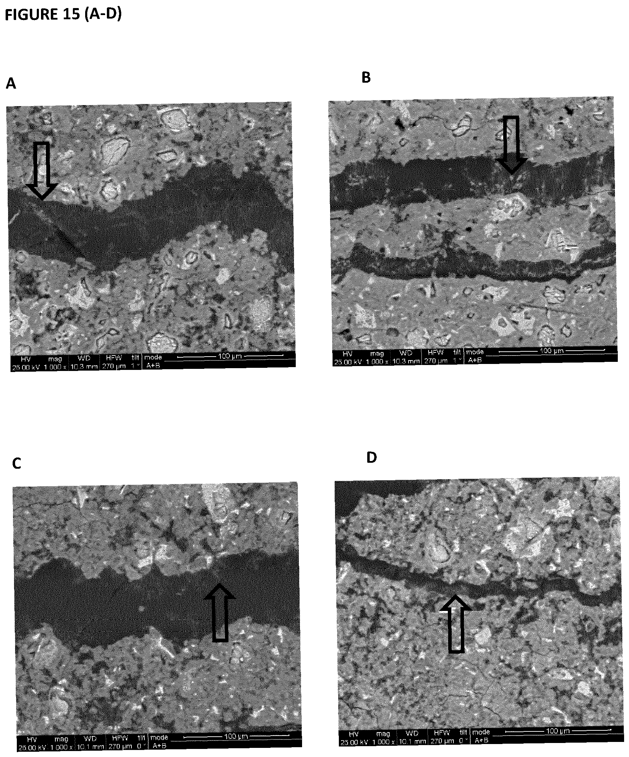

**Figure 15 (A-D).** Areas from the core of C1 (A-B) and C2 (C-D) capsules and the produced healing products, indicated by the arrows. Images are obtained from cross sections of ruptured capsules, examined under SEM, after 1- month healing period under water.

## DETAILED DESCRIPTION

The present invention relates to a novel encapsulated system for the development of self-healing building materials and a novel method of production of said system.

Said encapsulated system is in the form of a self- healing, single component capsule comprising an active core and a protective shell suitable for the healing of cracks created in building materials such as mortars and concrete.

Such an encapsulated system presents an increased strength of the single component capsules, which leads to their increased sustainability and therefore to increased lifespan for the concrete or building materials. Additionally, said capsules' specific structure allows for increased water tightness, through their outer non-permeable shell, and as a result for an efficient protection of the healing agent. More particularly, the materials used in the production of the shell result in elevated water-tightness, due to the dense microstructure and closed-porosity that they form. The external shell provides protection of the reactive core (healing agent) which allows reactivity of the healing agent both rigth after preparation and after curing of the cement mixtures, according to the process described in EN 196-1. The porosity and microstructure properties can be flexibly modified, in order to adapt any building material's needs. This structure also allows for a balanced release of the healing agent upon cracking, in terms of quantity, with regard to the capsule's size. Moreover, the proposed encapsulated system presents very good adhesion with the cement material of the concrete and efficient triggering of the capsules. An additional advantage of the proposed novel solution is the chemical composition of the capsule as such, which has a minimal impact on the strength properties of the cement. Such encapsulated systems are incorporated in the cement or concrete mixtures and when a crack is formed within the concrete matrix, said capsules are activated only with water or humidity, without the need of any further, external chemical or mechanical intervention. The addition of said capsules can be applied directly into cement or concrete mixtures, either by mixing with dry cement or during mixing of cement with water without the requirement for any initial or special pre-treatment, or any additional steps. Another important advantage of the proposed solution is that only the capsules that are crushed due to the crack formation are activated while the rest of them remain intact within the cement or concrete matrix for a potential subsequent use. Finally, the thickness of the capsules' shell can be adjusted and modified according to a building material's damage extent that we aim to heal use. For example, healing of small cracks requires the use of capsules with a relatively thin shell and thus low mechanical properties in order to be ruptured during crack propagation., A capsule size in the range of 1-10 mm provides sufficient volume for the healing agent, when compared to microcapsules and provides better concentration to volume ratio.

All the above mentioned advantagious properties of the proposed encapsulated systems result in a remarkably extended lifetime of the building materials and, hence, of the construction. By ensuring this way, reduced maintenance and repair costs, reduced cement consumptions and thus $CO_2$ cement emission is also achieved.

Thereofore, according to one aspect, the present invention relates to an encapsuleated system for self- healing of building materials, comprising an active core and a protective shell.

In one embodiment said encapsulated system comprises an active core characterised in that said active core contains cement, and crystalline admixtures, and/or calcium oxide, and/or magnesium oxide and/or a super plasticizer (SP) and a protective shell characterised in that said shell contains cement.

In one embodiment said encapsulated system comprises an active core characterised in that said active core contains cement, more preferably ordinary Portland cement (OPC) and crystalline admixtures, and/or calcium oxide, and/or magnesium oxide and/or a super plasticizer (SP) and a protective shell characterised in that said shell contains cement.

In one embodiment said encapsulated system comprises an active core characterised in that said active core contains cement, more preferably ordinary Portland cement (OPC) or belite/calcium sulfo-aluminate cement (BCSA) or a mixture of OPC and BCSA, and crystalline admixtures, and/or calcium oxide, and/or magnesium oxide and/or a super plasticizer (SP,) and a protective shell characterised in that said shell contains cement and sodium silicate (SS) or a setting accelerator.

In one embodiment said encapsulated system comprises an active core characterised in that said active core contains cement, more preferably ordinary Portland cement (OPC) or belite/calcium sulfo-aluminate cement (BCSA) or a mixture of OPC and BCSA, and crystalline admixtures, and/or calcium oxide, and/or magnesium oxide and/or a super plasticizer (SP) preferably polycarboxylate, and a protective shell characterised in that said shell contains cement, more preferably ordinary Portland cement (OPC) or (belite/calcium sulfo-aluminate cement (BCSA)) or a mixture of OPC and BCSA, and sodium silicate (SS) or a setting accelerator.

It should be noted that BCSA, chrystalline admixtures, CaO and MgO when added to OPC, usually up to 20 wt % of OPC, act as expansive agents, after cracking of the the concrete material and exposure to external humidity, assisting thus closure or filling of the additional empty space created by the crack. Addition of a super plasticizer (SP), usually at 0.5-3% wt of the OPC, provides fluidity to the mixture and helps the core material to get diffused towards the crack(s).

In one embodiment said encapsulated system comprises an active core and a protective shell characterised in that said system has a spherical or spheroidal shape.

In one embodiment said encapsulated system comprises an active core and a protective shell characterised in that said system has a spherical or spheroidal shape and wherein said active core has a diameter in the range of 0.5-10 mm, more pereferably 2-4 mm.

In one embodiment said encapsulated system comprises an active core and a protective shell characterised in that said system has a spherical or spheroidal shape, wherein said active core has a diameter in the range of 0.5-10 mm, more pereferably 2-4 mm and wherein said protective shell has a thickness in the range of 0.1-2 mm.

In another aspect, the invention relates to a novel method of production of a single component encapsulated system for self-healing of building materials. Said method is based on the well- known in the state of the art method of "pan-coating". Pan coating, a method widely used in the pharmaceuticals and food industry, is one of the oldest techniques for encapsulating solid materials.The proposed herein novel method is simple to perform and does not require complex and sophisticated technical equipment. The process steps can be easily scaled up without having to alter the intermediate steps or the equipment used. Furthermore, with said method coating of the total amount of cores (healing agent) is achieved, resulting in capsules with increased endurance which can remain intact for a prolonged period of time and can be activated only when needed (i.e. after a crack formation).

In capsule-based self-healing systems, the development of the shell is a crucial stage, as it has to remain intact, protect the healing agent in the long-term, as well as to be efficiently triggered during crack propagation and release the active components (e.g. active core). The shell: i)should be non-permeable in order to isolate the healing agent from the surrounding environment and avoid the early-stage consumption, ii)should have appropriate mechanical durability in order to withstand the severe conditions of mixing process, and iii) should have good adhesion to the cement matrix for efficient release of the healing agent during crack propagation. To meet these requirements, a set of the shell properties should be optimized, including: thickness, microstructure, morphology, chemical affinity with the matrix and mechanical strength.

Therefore, in one embodiment the present invention relates to a method of production of an encapsulated system for the self- healing of building materials, peferably concrete, or mortar, characterised in that said method comprises the following steps:

- preparation of an active core and
- preparation of a protective shell, coating said active core.

In one embodiment said method comprises the following steps:

preparation of an active core, wherein said preparation comprises

- addition of cement powder in the rotating drum of a pan- coating device
- wetting of the cement powder with water, preferably by spraying, wherein preferably the water/cement ratio is equal to 1/10 w/w of cement used and during the rotation of the drum, continuous air-flow is supplied
- removal of the formed core particles from the drum and drying; and

preparation of a protective shell coating said core particles, wherein said preparation comprises

- addition of said particles in the rotating drum
- wetting with water or a poly(vinyl) alcohol (PVA) water solution (10 wt%), preferably by spraying
- rotation of the drum with a supply of continuous air-flow
- addition of cement powder into the rotating drum so that the surface of said core particles is covered creating an external cement layer, and so that said protective shell is thickened
- spraying of said cement covered core particles with a sodium silicate water solution or a setting accelerator water solution, so that said protective shell is hardened
- performing the two previous steps one more time
- drying of the encapsulated particles

More particularly, in one embodiment said method comprises the following steps:

preparation of an active core, wherein said preparation comprises

- addition of cement powder in the rotating drum of a pan- coating device
- wetting of the cement powder with water, preferably by spraying, wherein the water/cement ratio is equal to 1/10 w/w of cement used and during the rotation of the drum, continuous air-flow at a temperature of 20-50 °C, preferably 40-50 °C, is supplied while the rotation speed is preferably in the range of 50-70 RPM
- removal of the formed core particles from the drum and drying

and wherein said formed core particles have a diameter in the range of 0.5mm-10 mm; and preparation of a protective shell coating said core particles, wherein said preparation comprises

- addition of said particles in the rotating drum
- wetting with water or a poly(vinyl) alcohol (PVA) water solution (10 wt%), preferably by spraying
- rotation of the drum with a supply of continuous air-flow
- addition of cement powder into the rotating drum so that the surface of said core particles is covered creating an external cement layer, and so that said protective shell is thickened
- spraying of said cement covered core particles with a sodium silicate water solution or a setting accelerator water solution, so that said protective shell is hardened
- performing of the two previous steps one more time
- drying of the encapsulated particles.

In a further embodiment said method comprises the following steps:

preparation of an active core, wherein said preparation comprises

- addition of cement powder in the rotating drum of a pan- coating device
- wetting of the cement powder with water for approximately 2 minutes, preferably by spraying, wherein the water/cement ratio is equal to 1/10 w/w of cement used and during the rotation of the drum, continuous air-flow at a temperature of 20-50 °C, preferably 40-50 °C, is supplied while the rotation speed is preferably in the range of 50-70 RPM
- removal of the formed core particles from the drum and drying in an oven at 40 °C for 24h, wherein said formed core particles have a diameter in the range of 0.5 -10 mm.

and wherein said formed core particles are classified preferably by sieving and core particles preferably in the range of 2-4 mm are collected; and preparation of a protective shell coating said collected core particles, wherein said preparation comprises

- addition of said particles in the rotating drum
- wetting with water or a poly(vinyl) alcohol (PVA) water solution (10 wt%), preferably by spraying
- rotation of the drum with a supply of continuous air-flow
- addition of cement powder into the rotating drum so that the surface of said core particles is covered creating an external cement layer, and so that said protective shell is thickened
- spraying of said cement covered core particles with a sodium silicate water solution or a setting accelerator water solution, so that said protective shell is hardened
- performing the two previous steps one more time
- drying of the encapsulated particles

In another embodiment, said method is further characterised in that the cement powder for the preparation of the core particle is pereferably ordinary Portland cement (OPC) or belite/calcium sulfo-aluminate cement (BCSA) or a mixture of OPC and BCSA and wherein said cement powder is mixed with crystalline admixtures, and/or calcium oxide, and/or magnesium oxide and/or a super plasticizer (SP), preferably polycarboxylate, and wherein the mixture is grinded for homogenization below 125 microns, preferably down to 63 microns.

In another embodiment, said method further comprises the following steps:

preparation of a protective shell coating said core particles wherein said preparation comprises

- selection of core particles with a diameter preferably in the range of 2-4 mm, preferably by sieving
- addition of said particles in the rotating drum
- wetting with water or a PVA water solution (preferably 10 wt%), preferably by spraying
- rotation of the drum with a supply of continuous air-flow at a temperature
- addition of cement powder, preferably ordinary Portland cement (OPC) or belite/calcium sulfo-aluminate cement (BCSA) or a mixture of OPC and BCSA, into the rotating drum so that the surface of said core particles is covered creating an external cement layer, so that said protective shell is thickened
- spraying of said cement covered core particles with a sodium silicate water solution preferably 10 wt %) or a setting accelerator water solution preferably 12 wt %, so that said protective shell is hardened
- performing the two previous steps one more time

- drying of the encapsulated particles.

In another embodiment, said method further comprises the following steps:
preparation of a protective shell coating said core particles wherein said preparation comprises

- selection of core particles with a diameter preferably in the range of 2-4 mm, preferably by sieving
- addition of said particles in the rotating drum
- wetting with water or a PVA water solution (preferably 10 wt%), preferably by spraying
- rotation of the drum with a supply of continuous air-flow at a temperature of 20-50 °C
- addition of cement powder, preferably ordinary Portland cement (OPC) or belite/calcium sulfo-aluminate cement (BCSA) or a mixture of OPC and BCSA, into the rotating drum so that the surface of said core particles is covered creating an external cement layer, so that said protective shell is thickened
- spraying of said cement covered core particles with a sodium silicate water solution preferably 10 wt % or a setting accelerator water solution preferably 12 wt %, so that said protective shell is hardened
- performing the two previous steps one more time
- drying at 40 °C for 4 h and storing at room temperature (RT).

In another embodiment, said method further comprises the following steps:
preparation of a protective shell coating said core particles wherein said preparation comprises

- selection of core particles with a diameter preferably in the range of 2-4 mm, preferably by sieving

- addition of said particles in the rotating drum

- wetting with water or a PVA water solution (preferably 10 wt%), preferably by spraying

- rotation of the drum with a supply of continuous air-flow

- addition of cement powder, preferably ordinary Portland cement (OPC) or belite/calcium sulfo-aluminate cement (BCSA) or a mixture of OPC and BCSA, into the rotating drum so that the surface of said core particles is covered creating an external cement layer, so that said protective shell is thickened

- spraying of said cement covered core particles with a sodium silicate water solution preferably 10 wt % so that said protective shell is hardened

- performing the two previous steps one more time

- drying of the encapsulated particles.

- spraying of said dried cement covered core particles with a sodium silicate water solution preferably 10 wt % one more time

- drying of the encapsulated particles.

In another embodiment, said method further comprises the following steps:
preparation of a protective shell coating said core particles wherein said preparation comprises

- selection of core particles with a diameter preferably in the range of 2-4 mm, preferably by sieving

- addition of said particles in the rotating drum

- wetting with water or a PVA water solution (preferably 10 wt%), preferably by spraying

- rotation of the drum with a supply of continuous airflow at a temperature of 20-50 °C

- addition of cement powder, preferably ordinary Portland cement (OPC) or belite/calcium sulfo-aluminate cement (BCSA) or a mixture of OPC and BCSA, into the rotating drum so that the surface of said core particles is covered creating an external cement layer, so that said protective shell is thickened

- spraying of said cement covered core particles with a sodium silicate water solution preferably 10 wt % or so that said protective shell is hardened

- performing the two previous steps one more time

- drying at 40 0C for 4 h and storing at room temperature (RT).

- spraying of said dried cement covered core particles with a sodium silicate water solution preferably 10 wt % one more time

- drying at 40 0C for 4 h and storing at room temperature (RT).

In another embodiment, said method further comprises the following steps:
preparation of a protective shell coating said core particles wherein said preparation comprises

- selection of core particles with a diameter preferably in the range of 2-4 mm, preferably by sieving

- addition of said particles in the rotating drum

- wetting with water or a PVA water solution (preferably 10 wt%), preferably by spraying

- rotation of the drum with a supply of continuous airflow

- addition of cement powder, preferably ordinary Portland cement (OPC) or belite/calcium sulfo-aluminate cement (BCSA) or a mixture of OPC and BCSA, into the rotating drum so that the surface of said core particles is covered creating an external cement layer, so that said protective shell is thickened

- spraying of said cement covered core particles with a setting accelerator water solution preferably 12 wt %, so that said protective shell is hardened

- performing the two previous steps one more time

- drying of the encapsulated particles.

- spraying of said dried cement covered core particles with a setting accelerator water solution preferably 12 wt %.

- drying of the encapsulated particles.

In another embodiment, said method further comprises the following steps:
preparation of a protective shell coating said core particles wherein said preparation comprises

- selection of core particles with a diameter preferably in the range of 2-4 mm, preferably by sieving

- addition of said particles in the rotating drum

- wetting with water or a PVA water solution (preferably 10 wt%), preferably by spraying

- rotation of the drum with a supply of continuous airflow at a temperature of 20-50 0C

- addition of cement powder, preferably ordinary Portland cement (OPC) or belite/calcium sulfo-aluminate cement (BCSA) or a mixture of OPC and BCSA, into the rotating drum so that the surface of said core particles is covered creating an external cement layer, so that said protective shell is thickened

- spraying of said cement covered core particles with a setting accelerator water solution preferably 12 wt %, so that said protective shell is hardened

- performing the two previous steps one more time

- drying at 40 0C for 4 h and storing at room temperature (RT).

- spraying of said cement covered core particles with a setting accelerator water solution preferably 12 wt

%

- drying at 40 0C for 4 h and storing at room temperature (RT).

It should be noted that sodium silicate or setting accelerator is sprayed after the formation of the shell in the drum. In the case of sodium silicate, its limited penetration and the reaction with the cement creates an outer shell, that is rich in calcium silicate hydrate (C-S-H) which is formed by the reaction of sodium silicate and cement. Sodium silicate increases the strength of the shell and at the same time decreases its porosity, thus protecting more effectively the core.

In an even further embodiment said method is characterised in that the produced protective shell has a thickness in the range of 0.1-2 mm.

In one embodiment the present invention relates to an encapsulated system directly obtainable by the method described in anyone of the above embodiments.

In another embodiment said encapsulated system, directly obtainable by the method described in anyone of the above embodiments, comprises an active core and a protective shell.

In another embodiment said encapsulated system, directly obtainable by the method described above, comprises an active core characterised in that the diameter of said core is in the range of 0.5-10 mm, preferably 2-4 mm, and a protective shell characterised in that the thickness of said protective shell is in the range of 0.1- 2 mm.

In another aspect, the present invention relates to a use of an encapsulated system comprising an active core and a protective shell for the self- healing of building materials, preferably concrete or mortar.

In an even further aspect the invention relates to a use of an encapsulated system comprising an active core and a protective shell as an additive providing self-healing effect to building materials such as Ordinary Portland Cement (OPC), blended hydraulic cement products, rapid hardening cement, low heat cement, sulphate resisting cement, white cement, Portland pozzolanic cement, coloured cement, oil-well cement, self-cleaning cement and mortars.

In one embodiment the invention relates to a use of an encapsulated system comprising an active core and a protective shell for the self- healing of cracks formed within building materials, preferably concrete or mortar, wherein said cracks are >100 $\mu$m and up to 700 $\mu$m.

## Definitions

The terms encapsulated system, capsule, single component capsule, core/shell encapsulated system are used in the context of the present invention interchangeably. The terms core, active core, reactive core, core component, core particle, core healing agent, healing agent are used in the context of the present application interchangeably. The term setting accelerator or cement accelerator refers to an admixture for the use in concrete, mortar, rendering or screeds. The addition of an accelerator speeds the setting time and thus cure time starts earlier. Typical chemicals used for acceleration today are calcium nitrate ($Ca(NO_3)2$), calcium nitrite ($Ca(NO_2)_2$), calcium formate ($Ca(HCOO)_2$), aluminium compounds etc.

Unless otherwise defined, scientific and technical terms used herein have the meanings that are commonly understood by those of ordinary skill in the art. In the event of any latent ambiguity, definitions provided herein take precedent over any dictionary or extrinsic definition.

The term "about" or "approximately" means the mentioned value +/-20%, for example about 10 shall mean 8 to 10.

Unless otherwise required by context, singular terms shall include pluralities and plural terms shall include the singular. The use of "or" means "and/or" unless stated otherwise. The use of the term "including," as well as other forms, such as "includes" and "included," is not limiting.

While the present invention has been described with reference to the specific embodiments thereof, it should be understood by those skilled in the art that various changes may be made and equivalents may be substituted without departing from the true spirit and scope of the invention using this disclosure as a guide. Having now described certain embodiments in detail, the same will be more clearly understood by reference to the following example, which is included for purposes of illustration only and is not intended to be limiting.

## EXAMPLES

### Materials and equipment

Ordinary Portland cement (CEM I 42.5) was supplied by TITAN S.A.; Poly(vinyl alcohol) (PVA) water solution was purchased from Remmers; sodium silicate solution was purchased from Sigma Aldrich ; and accelerator was supplied by DOMYLCO Constructions Chemicals.

CEN standard siliceous sand was from AFNOR; pan-coating device (rotating drum with controlled speed and adjustable angle of rotation) is made in house and furnace is from Memmert GmbH.

### EXAMPLE 1

### Preparation of self -healing encapsulated systems

*A. Preparation of the active core (healing agent)*

For the production of the core component, cement powder (i.e. ordinary Portland cement - OPC, CEM I 42.5) was added into the rotating drum and tap water was uniformly sprayed to the cement powder within approximately 2 min in orderto form nubs; the water/cement ratio was equal to 1/10 (w/w) in order to achieve the formation of spherical or spheroidal particles. During the rotation of the drum, continuous airflow at temperature of 20-50 °C was supplied while the rotation speed is in the range of 50-70 RPM. A temperature in the range 40-50 °C is preferred as this way aggregation of the particles is avoided, while such a temperature facilitates the evaporation of humidity and hence hydration of the particles is avoided. The formed core particles were removed from the drum and dried in an oven at 40 °C for 24h. This drying step allows the evaporation of the remaining humidity. When the drying process was finished, core particles with a diameter between 0.5-10 mm were produced; For the next step, the core particles with a diameter in the range of 2-4 mm were selected by sieving.

Alternatively, the cement powder (e.g. ordinary Portland cement - OPC, CEM I 42.5 or belite/calcium sulfo-aluminate cement (BCSA) or a mixture of OPC and BCSA), which was added into the rotating drum was mixed with crystalline admixtures, and/or calcium oxide, and/or magnesium oxide and/or optionally with a super plasticizer (SP)e.g. polycarboxylate, in the powder/solid state and the different mixtures were grinded for homogenization down to 63 microns.

*B. Preparation of the outer protective shell (encapsulation of the core component)*

The selected core particles with a size between 2-4 mm were placed in the rotating drum and sprayed with tap water, which was used as a kneading agent. In an alternative step, a PVA water solution (10 wt. %) was used as kneading agent. As in the previous step (A), during the rotation of the drum, continuous airflow at temperature of 20-50 °C was supplied. Cement powder (i.e. ordinary Portland cement - OPC, CEM I 42.5) was added into the rotating drum and covered the surface of the core particles, creating an external cement layer. The thickness of the external layer was increased by repeating this process and replacing water by a sodium silicate water solution (10 wt %), leading to immediate hardening of the shell, through the reaction of sodium silicate with cement. The addition of cement powder into the rotating drum followed by the spraying with sodium silicate was repeated one more time. This initial batch of capsules (named "C1") was dried at 40 °C for 4 h and stored at room temperature (RT).

In order to assess the effect of sodium silicate concentration on the performance characteristics of the resulting capsules, a second batch of capsules (named "C2"), was prepared. C2 capsules were prepared following the steps above, but after the drying process, the external layer of the capsules was sprayed with sodium silicate solution for one more time. Afterwards, capsules C2 were dried at 40 °C for 4 h and stored at room temperature. The resulting capsules have a shell thickness in the range of 0.1- 2mm and a spherical or spheroidal shape.

Moreover, the effect of a setting accelerator on the shell properties was evaluated. Capsules (named "C3") were prepared according to the same methodology followed for the preparation of C2 capsules, replacing sodium silicate solution with a water solution of a setting accelerator. A 12 wt % water solution of the setting accelerator was sprayed during shell formation.

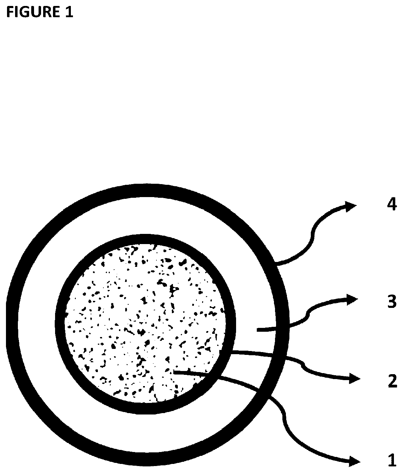

**Figure 1** represents a graphical representation of the capsule in a section. The capsule comprises a capsule shell and a capsule core. The capsule core comprises an inner core (1) made of OPC or BCSA or mixtures thereof, and crystalline admixtures, and/or CaO, and/or MgO, and/or a SP), and an outer stabilization layer made of hydrated cement (2). The capsule shell comprises an outer capsule layer (4), composed of a cement and sodium silicate mixture and, an inner capsule layerthat forms the main body of the shell, composed of cement (3).

### EXAMPLE 2

**Assessment study of the produced capsules (encapsulated systems) characteristics.**

*A. Morphological characteristics of the capsules*

The particle size distribution and the shape factor, also called circularity ($\phi$ circularity), of the capsules were assessed by analysing images of the capsules, obtained by a Leica S6D optical microscope, and using an image analysis software (ImageJ). A sample of at least 300 capsules, randomly selected from each batch (C1 and C2), were measured. The circularity is expressed by the following equation and takes into consideration except from the shape of the particles, the roughness of their surface:

$$\phi\_circularity = (4 \cdot \pi \cdot A)/(P\_rough^2)$$

Where A is the projected area of the capsule and P rough is the perimeter of the projection. The morphology, microstructure and thickness of the shell were examined by a FEI-QUANTA Scanning Electron Microscopy (SEM). Representative capsules from each batch were selected and severed in two parts and the cross sections were analysed.

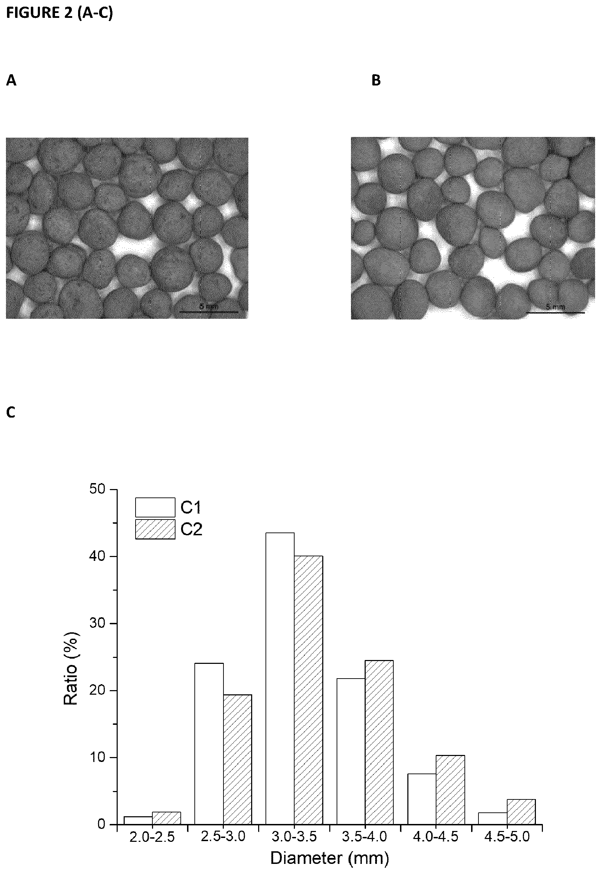

**Figure 2** shows representative samples of C1 and C2 capsules produced with the method described in example 1. Macroscopic examination of capsules revealed that C1 capsules are round (circularity ($\phi$C1) = 0.859±0.024) and present some cavities on their surface, while C2 capsules (circularity ($\phi$C2) = 0.830±0.057) have a smoother surface due to the additional rolling time and sprayed solution. The circularity of both types of capsules varied between 0.8 and 0.9, indicating that both types of capsules are well rounded. Usually largest capsules present a more spherical geometry, as during the coating process they attract more cement powder on their surface and thus, a more uniform shell is created.

Starting with core particles of 2 to 4 mm, capsules with diameters up to 5 mm were prepared. The similar particle size distribution of the two batches produced in this experiment is an indication of reproducibility of the developed method, meaning that the morphological characteristics of the capsules prepared in different times and batches are the same. According to the followed methodology, the size of the capsules can be gradually increased depending on the quantity of the shell material applied to the surface of the core particles. The quantity of the shell material should be added gradually in order to ensure the formation of a uniform shell in all capsules and avoid discontinuities that will affect the long-term protection of the healing agent. Microscopic examination of C1 capsules **(Figure 3A)** revealed that the gradual addition of cement around the core renders difficult the distinction of the interface with core and the determination of shell thickness. The microstructure of the shell and the core is similar as both consist of cement grains, which are sparsely stacked, layer by layer. In contrast, a more uniform shell has been created in C2 capsules **(Figure 3B),** indicating a clear interface between the core and the shell. In this case, an estimation of shell thickness was easier. However, shell thickness depends on the size of capsules. For capsules in the range of 3-3.5 mm that form the majority of the batch, SEM examination revealed that shell thickness of C2 capsules varies between 250 and 450 $\mu$m. Minimum shell thickness was observed in the thinner fraction of the batch (150 $\mu$m), while maximum shell thickness reached 550 $\mu$m.

Looking at the microstructure of the shell, a dense film of hydrated cement **(Fig.3C-D)** has been created in the external surface of the capsules as a result of the reaction of cement particles and sodium silicate solution. Bellow this external dense layer a relatively porous matrix is observed. The homogeneity and porosity of the shell was not affected by the size of the microcapsules, since in all capsules the shell is formed layer by layer under the same conditions.

B. *Reactivity of the healing agent*

The effect of water, PVA and sodium silicate solutions, used during the production of the capsules, on the reactivity of the core particles was investigated by SEM and thermogravimetric analysis (TGA). Cross sections of the capsules were examined under SEM and the microstructure of the core was compared with the microstructure of fully hydrated core particles, which remained in tap water for 28 days. Moreover, thermogravimetric analysis was conducted in crushed capsules after synthesis, as well as in full hydrated crushed capsules that had been immersed in tap water for 28 days.

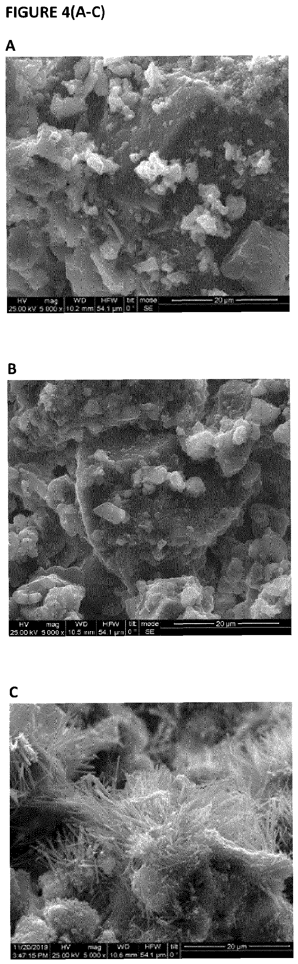

**Figures 4A** and **4B** depict the microstructure of the C1 and C2 cores in a fractured section after their formation, indicating the micromorphology of the non-reacted or non-hydrated OPC, especially when compared to the **Figure 4C** that depicts the morphology of the hydrated core.

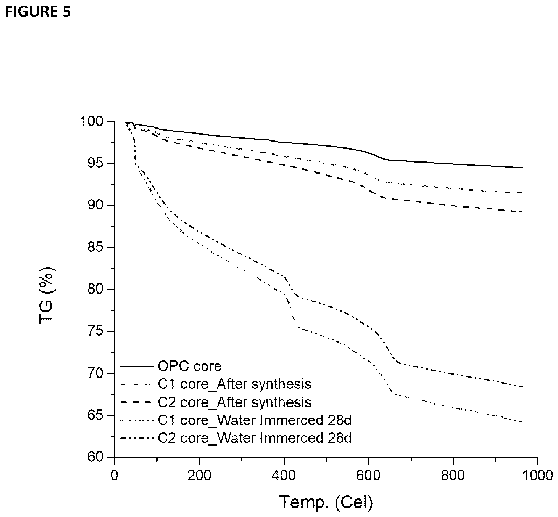

**Figure 5** shows thermogravimetric analysis curves of the C1 and C2 cores material at different stages indicating the weight loss at different temperatures due to de-hydration and de-hydroxylation reactions. Compared to the reference OPC core, it can be seen that in both processes (C1 and C2) the hydration of the cores in the produced capsules is very limited. The higher the difference between 30-1000 °C the more hydrated the core.

*C. Mechanical properties of the capsules and survivability of capsules during mixing process of cement with water and aggregates*

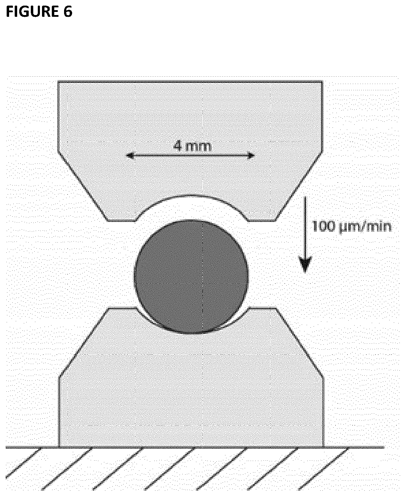

The crushing strength of the capsules was measured using a 100 kN Instron loading frame with cell resolution 0.01 N. The tests were performed under displacement control conditions at a constant rate of 100 $\mu$m/min. At least 20 capsules with diameter in the range of 3.8 - 4.5 mm of each type of capsules (C1, C2 and C3) were tested and the mean value was adopted. **(Figure 6)**

To examine the survivability of capsules during the mixing process, with the cement and aggregates (CEN 196-1 standard siliceous sand), cement mixtures with 10 vol. % of capsules were prepared. The number of capsules used replaced equal volume of the sand (0-2 mm). The cement mixtures with capsules were prepared according to the methodology described in EN 196-1, in a planetary movement mixer, adding the aggregates together with capsules. The composition of the mixtures is presented in Table 1.

**Table 1**

| OPC | w/c (w/w) | b/a (w/w) | C/a (v/v) |
|---|---|---|---|
| 450g | 0.5 | 1/3 | 0.1 |

Where, w: tap water, c: cement, b: binder, a: aggregates, C: capsules (C1, C2 or C3).

Immediately after the end of the mixing process, the capsules were separated from the wet mixture by washing the mixture with excess of water in a 2 mm sieve. Finally, the volume of intact capsules collected at sieve was measured and compared to the initially added volume, in order to calculate the survivability ratio.

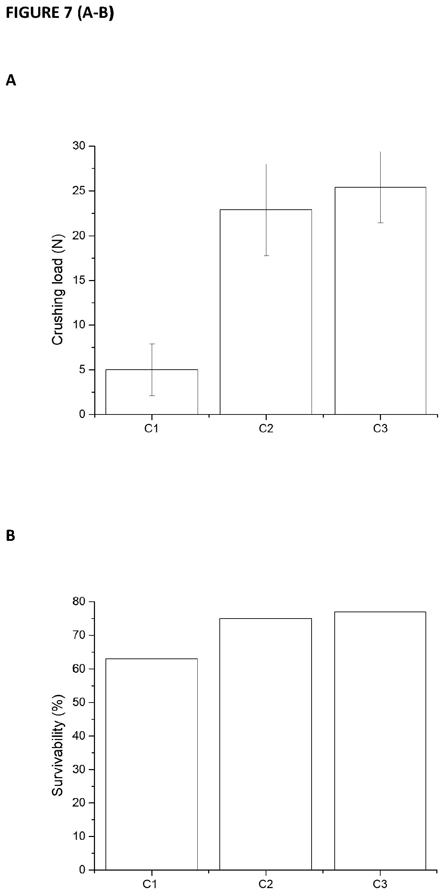

**Figure 7** shows the crushing load of capsules C1, C2 and C3, loaded under compression at a constant rate of 100 $\mu$m/min (A) and (B) survivability ratio of capsules during the mixing process of cement with water and aggregates.

Regarding the average crushing strength, C2 capsules presented almost five times higher values (about 25 N) in comparison to C1 capsules (figure 6), where the maximum load did not exceed the value of 5 N. The higher sodium silicate content in C2 capsules seems that had a beneficial effect on the enhancement of shell's strength. Due to the filling effect of C-S-H produced by the reaction of silicate ions and cement, lower pore diameters and improved compactness was achieved. The replacement of sodium silicate solution with setting accelerator improved the crushing load of capsules, resulting five times stronger shell (25 N).

Moreover, for a given shell composition and microstructure, the crushing load of capsules depends on the size of the tested capsules, the geometry and the shell thickness, e.g. the shell thickness is increased, the crushing load is also increased. In particular, capsules with a size in the range of 3.8-4.2 mm were tested, forming a homogenous group. However, defects in capsules surface and variation of the shell thickness are some factors that contribute to fluctuation of the crushing load values.

Crushing load values provide an estimation regarding the behavior of capsules during the mixing process and, along with adhesion issues, affect the efficiency of the triggering mechanism. The enhancement of crushing load of capsules from 5 N (C1) to 23 N (C2) and 25 N (C3) resulted also in the increase of survivability ratio during the mixing process, by 18 % (figure 6B). In order to further reduce loss ratio, crushing strength can be improved by modifying the size, shell thickness and microstructure of the capsules.

**Example 3**

**Integration of capsules (encapsulated systems) into cement mortar mixtures**

*A. Workability of cement mortar mixtures*

The effect of capsules' type and concentration on the flow, and consistency on the fresh mortar mixtures was evaluated according to the flow table test (BS EN 1015-3:1999) that is described below. First, cement mixtures of 5, 10 and 20 % of C1 and C2 capsules were prepared according to the methodology followed during the survivability test. Then, each cement mixture was placed into a truncated conical mould, placed centrally on the disc of the flow table. The cement mixture was added in two layers, each of them being compacted by at least 10 short strokes of the tamper to ensure uniform filling of the mould. The excess mortar was then skimmed off with a palette knife and the disc was carefully cleaned of any paste or water. After 15 seconds, the mould was lifted vertically, and the disc was jolted 15 times at a constant frequency of one per second to spread out the wet/fresh mortar mixture. The diameter of the mixture spread was measured in two directions at right angles and the average was stated to the nearest mm.

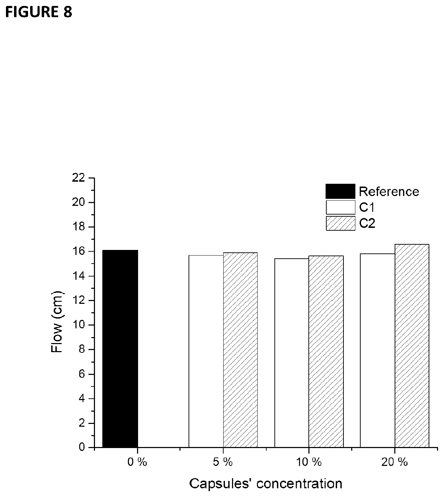

Capsules were treated as aggregates and added to the cement mixtures as partial replacement of sand by volume, in order to keep the same volume of aggregates in the mixture. Generally, the incorporation of macrocapsules in cement mixtures is expected to modify the viscosity of the mixture as it affects the grain size distribution and the packing density of the system. However, it was found that the addition of up to 20 % of cement-based capsules has negligible effect on the rheology of the cement mixture, as it is demonstrated in **Figure 8.** The fact that capsules were added as partial replacement of sand could interpret this behavior, as by this way the addition of capsules does not significantly affect the packing density of the system.

*B. Effect of capsules addition on mechanical properties of cement mortars*

To evaluate the effect of capsules type and concentration on the mechanical properties of the composite mixtures, compression and 3-point bending testing were conducted using a 100 kN Instron loading frame with cell resolution 0.01 N. For each sample, three prismatic specimens of 2 cm x 2 cm x 8 cm were prepared by manual mixing and cured under water for 28 days. After the curing period, the prismatic specimens were loaded by 3-point bending at a constant rate of 100 $\mu$m/min. Afterwards, 3 cubes of 2 cm x 2 cm x 2 cm were cut from the ends of the ruptured prismatic specimens and used for compressive testing (rate of 150 $\mu$m/min).

Compressive strength results for varying volume fractions of capsules are given in **Figure 10 A.** The compressive strength of cement mortar specimens after 28 days of curing under water was increased with the addition of capsules. The compressive strength of cement for given mix proportions is significantly affected by the degree of compaction and packing density of the grains. The incorporation of cement-based capsules modified the size distribution of aggregates, as capsules with diameters up to 5 mm were added. Considering that the total volume of all aggregate-capsules mix remained the same, the increase of capsules amount increased the packing density of the system and enhanced the compactness of the mixture. Also, considering that capsules act as aggregates, it is expected to benefit the strength of the mixture, since several studies report that increasing the maximum size of aggregates leads to an increase of the compressive strength of cement. Moreover, the elevated compressive strength of mixtures with C2 capsules is attributed to the enhanced mechanical properties of the capsules, that increase the strength of the hardened mixture. Therefore, the contribution of the shell properties is justified. In contrast, the bending strength is slightly decreased at all concentrations of C1 capsules, while in the case of C2 the bending strength is decreased when the amount of capsules is above 5%, indicating again the beneficial role of elevated shell strength of C2

(Figure 10B).

*C. Distribution of capsules in the cement matrix*

To optimize the healing efficiency of a cementitious material, optimum concentration of capsules combined with uniform distribution in the cement matrix are required. To evaluate the distribution of capsules in the cement matrix prismatic specimens with embedded capsules (2 cm x 2cm x 8 cm) were prepared by manual mixing and cured under water for 7 days. The specimens were sawn into 5 mm thick slices and the distribution of capsules was determined according to the following equation. The dispersion coefficient $\alpha$ is calculated as an exponent of $-\phi(x)$.

$$\varphi(x) = \sqrt{\frac{\Sigma_i^n (x_i - \bar{x})^2}{n}} \Big/ \bar{x}$$

$$a = \exp[-\varphi(x)]$$

Where $\alpha$ is the dispersibility coefficient, n is the number of examined regions, xi the amount of capsules in the arbitrary region and $\bar{x}$ the average amount of capsules in each region. The dispersibility of the capsules is considered satisfactory when the coefficient value is above 0.5. The effect of the different type and concentration (5, 10 and 20 % volumetric replacement of sand) of capsules were evaluated.

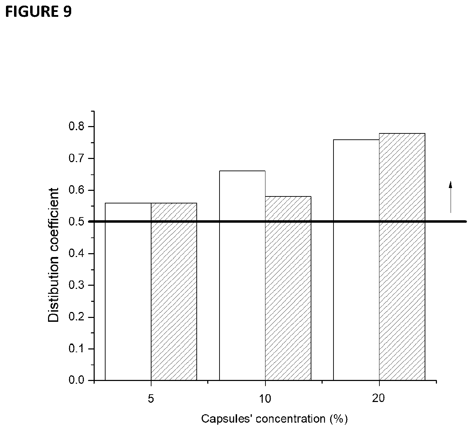

In **Figure 9** the distribution coefficient of varying volume fractions of C1 and C2 capsules is demonstrated. In all mixtures, the distribution coefficient is above 0.5 and is increased as the concentration of capsules is also increased. When 20 % of capsules is incorporated into the cement mixture the value of distribution coefficient is about 0.8, indicating that capsules are uniformly distributed all over the specimen, without agglomerating. The type of capsules seems that does not affect their distribution in the matrix as in both type of capsules the hydrophilic surface of the shell contributed to good dispersion, eliminating floating phenomena, observed in other types of capsules.

**Example 4**

**Assessment of the healing properties of the capsules (encapsulated systems)**

*A. Triggering of healing mechanism*

Several factors influence the healing capacity of a cement-based self-healing mortar, including the triggering efficiency of capsules. Healing process is initiated when capsules are mechanically damaged through the crack. Thus, good adhesion strength and appropriate strength of the capsules are required for maximizing the triggering mechanism efficiency. In order to investigate the triggering mechanism of C1 and C2 capsules, the prismatic specimens used to study the effect of capsules on the mechanical properties were split and the crack faces were examined under SEM.

When the prismatic specimens were fractured, it was found that almost all the capsules were activated and good bonding between the external surface of the shell and the binder has been created **(Figure 11A-B)**. The prepared cementitious capsules present the advantage of good chemical affinity of the shell and the matrix and result in elevated adhesion strength. This is an essential part of capsules' development as good adhesion eliminates the negative effect of capsules on mortars properties and maximizes the efficiency of the triggering mechanism of capsules upon damage. Indeed, as previously mentioned, the addition of both types of capsules to the cement mixtures improved the compressive strength of the cement and slightly reduced the flexural strength.

Moreover, the examination of the fractured capsules revealed that the microstructure of the shell has been modified after the integration of capsules to the cement mixtures. After the mixing process of capsules with the cement, water and sand, and after 28 days of curing under water, it is observed that the initial porous microstructure has been change and the shell has become dense. Shell boundaries in both types of capsules are clearly distinguished and separated from the porous microstructure of the core. This indicates that the presence of excess water during mixing and curing processes resulted in rapid reaction of the reactive compounds of the shell, producing C-S-H that filled the initial pores **(Figure 3)**. Furthermore, cross sections of resin mounted damaged specimens with embedded capsules were examined under SEM **(Figure 12A-B)**. In both cases, when the crack reached a capsule, it efficiently ruptured the shell and released the healing agent in the crack face. The good bonding of the shell with the matrix results in activation of the healing mechanism upon damage (i.e. the water can penetrate and react with the core), while crack deflection was not observed.

*B. Effect of healing process to water capillary absorption*

The effect of capsules' type (C1 and C2) and concentration (5, 10 and 20 % as partial replacement of sand by volume) on the healing efficiency of plain cement was evaluated in terms of water capillary absorption. Three prismatic specimens (2 cm x 2 cm x 8 cm) were prepared for each sample and cured under water for 28 days. Prior to cracking all specimens were notched with a rotating diamond blade. The notch depth and width were measured as 3 and 0.8 mm respectively. The mechanical loading of the prisms was performed on a 100 kN Instron loading frame with cell resolution 0.01 N. The prisms were loaded at a constant rate of 100 $\mu$m/min and the loading was stopped when reached the value of 100 N.

The water capillary absorption coefficient was determined for all damaged specimens after cracking and after 14 and 28 days of healing under water. Before testing, all specimens were dried in an oven at 40 °C for 24 h to remove moisture. Afterwards, the bottom (notched) and sides of the specimens were sealed with waterproofed aluminium tape, and only an area around the crack remained uncovered in order to monitor the changes of the capillary absorption through the crack. More specifically, an area of 5 mm x 20 mm centred on the crack left exposed to the water, and the weight changes were monitored for 1 h in all prisms. The capillary coefficient is calculated as the slope of the curve by plotting mass uptake against square root of time.

The sorptivity coefficient was calculated for each sample using the mass change measurements and the results are presented in **Figure 13A-B.** After cracking, the sorptivity coefficient of the specimens containing capsules is similar and slightly smaller related to the reference specimens, probably due to the improved consistency of the specimens as a result of the addition of capsules.

The results indicate that healing is noticeable in all samples during the first 14 days, while after 14 additional days of healing under water (28 days of healing), no significant changes were observed. This shows that the main reactions of the healing mechanism take place within the first 14 days of healing, and the additional healing period does not significantly improve the healing efficiency.

The addition of C1 capsules has a beneficial role on the healing efficiency of the cement mortar according to the water capillary absorption results. A significant reduce of water uptake was observed after healing in the specimens with embedded C1 capsules, compared to the reference specimens, indicating the activation of the capsules and the enhancement of the autogenous healing process of the cement binder. When C2 capsules were added in fractions up to 10 %, no significant effect is observed on the sorptivity coefficient. The minor effect of C2 capsules is partially attributed to the lower availability of active components compared to C1 capsules. Due to the extra sodium silicate sprayed to the external surface of the shell, a more stable shell was formed. In contrast, the lower sodium silicate concentration of C1 capsules resulted in higher availability of active components in the shell, which acted as additional healing agent, taking into account the early age of the specimens (28 days of cracking and 28 days of healing). However, when 20 % of C2 capsules is added to the cement mixture a noticeable decrease of the water uptake is obtained and the sorptivity coefficient is reduced at the same level with the specimens containing the same fraction of C1 capsules.

Microscopic examination of the fractured areas revealed the formation of secondary healing products on the crack faces inside and around C1 and C2 capsules. No significant difference was observed between the different type of capsules (C1 and C2), and in both cases the main healing products observed on the ruptured surface of the capsules were ettringite, portlandite and other hydraulic phases **(Figure 14A-D).** Moreover, the formation and distribution of the healing products inside the cracks is demonstrated in **Figure 15A-D.** The images represent cross section of cracks of different widths from internal areas of the capsules. The healing products are indicated by the arrows and it is shown that tend to connect the two sides of the crack and fill the empty volume. In areas with smaller crack widths, this phenomenon is more intense and more healing products are observed.

## Claims

1. A method of production of an encapsulated system for self- healing of building materials, peferably concrete or mortar, **characterised in that** said method comprises the following steps:

   - preparation of a core particle and
   - preparation of a shell, coating said core particle,
   wherein said preparation of a core particle comprises
   - addition of cement powder in the rotating drum of a pan- coating device
   - wetting of the cement powder with water,
   wherein preferably the water/cement ratio is equal to 1/10 and during the rotation of the drum, continuous airflow is supplied
   - removal of the formed core particles from the drum and drying,
   and wherein said formed core particles have a diameter in the range of 0.5-10 mm; and wherein said preparation of a shell coating said core particles comprises
   - selection of core particles preferably with a diameter in the range of 2-4 mm, preferably by sieving
   - addition of said core particles in the rotating drum
   - wetting with water or a PVA water solution, preferably 10 wt%
   - rotation of the drum with a supply of continuous air-flow
   - addition of cement powder into the rotating drum so that the surface of said core particles is covered creating an external cement layer
   - spraying of said cement coated core particles with a sodium silicate water solution preferably 10 wt % or a setting accelerator water solution, preferably 12 wt %, so that said shell is hardened

- performing the previous two steps one more time, so that said shell is thickened and hardened
- drying of the coated particles

2. A method of production of an encapsulated system according to claim 1, further **characterised in that** said preparation of a core particle comprises

- addition of cement powder, preferably ordinary Portland cement (OPC) or belite/calcium sulfo-aluminate cement (BCSA) or a mixture of OPC and BCSA, and crystalline admixtures, and/or calcium oxide, and/or magnesium oxide and and/or a super plasticizer (SP) in the rotating drum of a pan- coating device
- wetting of the cement powder with water, preferably by spraying for approximately 2 minutes, wherein the water/cement ratio is preferably equal to 1/10 and during the rotation of the drum, continuous airflow at a temperature of 20-50 °C is supplied
- removal of the formed core particles from the drum and drying

and wherein said formed core particles have a diameter in the range of 0.5-10 mm; and wherein said preparation of a shell coating said core particles comprises

- selection of core particles with a diameter in the range of 2-4 mm by sieving
- addition of said particles in the rotating drum
- wetting with water or a PVA water solution preferably 10 wt%, preferably by spraying
- rotation of the drum with a supply of continuous air-flow at a temperature of 20-50 °C
- addition of cement powder preferably ordinary Portland cement (OPC) or belite/calcium sulfo-aluminate cement (BCSA) or a mixture of OPC and BCSA, into the rotating drum so that the surface of said core particles is covered creating an external cement layer
- spraying of said cement coated core particles with a sodium silicate water solution preferably 10 wt % or setting accelerator water solution preferably 12 wt %, so that said protective shell is thickened and hardened
- performing the previous two steps one more time
- drying of the coated particles.

3. A method of production of an encapsulated system according to claim 2, further **characterised in that** said preparation of an active core particle comprises

- addition of cement powder, preferably ordinary Portland cement (OPC) or (belite/calcium sulfo-aluminate cement (BCSA)) or a mixture of OPC and BCSA, and crystalline admixtures, and/or calcium oxide, and/or magnesium oxide and and/ or a super plasticizer (SP) in the rotating drum of a pan- coating device
- wetting of the cement powder with tap water, preferably by spraying for approximately 2 minutes,

wherein the water/cement ratio is was equal to 1/10 and during the rotation of the drum, continuous air-flow at a temperature of 40-50 °C is supplied, while the rotation speed is in the range of 50-70 RPM
- removal of the formed core particles from the drum and drying in an oven at 40 °C for 24h and wherein said formed core particles have a diameter in the range of 0.5-10 mm; and wherein said preparation of a protective shell coating said core particles comprises
- selection of core particles with a diameter in the range of 2-4 mm by sieving
- addition of said particles in the rotating drum
- wetting with water or a PVA water solution (10 wt%), preferably by spraying
- rotation of the drum with a supply of continuous air-flow at a temperature of 40-50 °C
- addition of cement powder preferably ordinary Portland cement (OPC) or belite/calcium sulfo-aluminate cement (BCSA) or a mixture of OPC and BCSA, into the rotating drum so that the surface of said core particles is covered creating an external cement layer
- spraying of said cement coated core particles with a sodium silicate water solution (10 wt %) or a setting accelerator water solution (12 wt %), so that said protective shell is thickened and hardened
- performing the previous two steps one more time
- drying at 40 °C for 4 h and storing of said coated particles at room temperature (RT).

4. A method according to anyone of claims 1-3, further **characterised in that** said cement powder used during the step of preparation of said core particle is perererably ordinary Portland cement or belite/calcium sulfo-aluminate cement (BCSA) or a mixture of OPC and BCSA and wherein said cement powder is mixed with crystalline admixtures, and/or calcium oxide, and/or magnesium oxide and and/or a super plasticizer (SP), preferably polycarboxylate and wherein the mixture is grinded for homogenization down to 63 microns.

5. A method according to anyone of claims 1-4, further **characterised in that** said preparation of a shell coating said core particles comprises

- selection of core particles, preferably with a diameter in the range of 2-4 mm, preferably by sieving
- addition of said core particles in the rotating drum
- wetting with water or a PVA water solution (preferably 10 wt%)
- rotation of the drum with a supply of continuous air-flow
- addition of cement powder into the rotating drum so that the surface of said core particles is covered creating an external cement layer
- spraying of said cement coated core particles with a sodium silicate water solution (preferably 10 wt %)
- performing the previous two steps one more time, so that said shell is thickened and hardened
- drying of the coated particles
- spraying of said dried cement coated core particles with a sodium silicate water solution (preferably 10 wt %) one more time
- drying of the coated particles preferably at 40 °C for 4 h and storing of said coated particles at room temperature (RT).

6. A method according to anyone of claims 1-4, further **characterised in that** said preparation of a shell coating said core particles comprises

- selection of core particles, preferably with a diameter in the range of 2-4 mm, preferably by sieving
- addition of said core particles in the rotating drum
- wetting with water or a PVA water solution preferably (preferably 10 wt%)
- rotation of the drum with a supply of continuous air-flow
- addition of cement powder into the rotating drum so that the surface of said core particles is covered creating an external cement layer
- spraying of said cement coated core particles with a setting accelerator water solution (preferably 12 wt %)
- performing the previous two steps one more time, so that said shell is thickened and hardened
- drying of the coated particles
- spraying of said dried cement coated core particles with a setting accelerator water solution (preferably 12 wt %)
- drying of the coated particles preferably 40 °C for 4 h and storing of said coated particles at room temperature (RT).

7. A method according to anyone of claims 1-6, wherein said shell of said coated particles has a thickness in the range of 0.1-2 mm .

8. An encapsulated system for self- healing of building materials, preferably concrete or mortar, directly obtainable by the method of anyone of claims 1-7.

9. An encapsulated system according to claim 8, wherein the core particle has a diameter in the range of 0.5- 10 mm, preferably 2-4 mm.

10. An encapsulated system according to claim 9 wherein said shell coating said core particle has a thickness in the range of 0.1-2 mm.

11. An encapsulated system according to anyone of claims 8 to 10, **characterised in that** said system has a spherical or spheroidal shape.

12. Use of an encapsulated system of anyone of claims 8 to 11 for the self- healing of building materials, preferably concrete or mortar.

13. Use of an encapsulated system of anyone of claims 8 to 11 as an additive in building materials.

14. Use of an encapsulated system according to claim 12, for the self- healing of cracks formed within building materials, preferably concrete or mortar, wherein said cracks are >100 $\mu$m and up to 700 $\mu$m.

**FIGURE 1**

**FIGURE 2 (A-C)**

A

B

C

**FIGURE 3 (A-D)**

A

B

C

D

**FIGURE 4(A-C)**

A

B

C

**FIGURE 5**

**FIGURE 6**

**FIGURE 7 (A-B)**

**A**

**B**

**FIGURE 8**

**FIGURE 9**

**FIGURE 10 (A-B)**

A

B

## FIGURE 11 (A-B)

A

B

FIGURE 12 (A-B)

A

B

**FIGURE 13 (A-B)**

A

B

FIGURE 14 (A-D)

A

B

C

D

FIGURE 15 (A-D)

A

B

C

D

Europäisches
Patentamt

European
Patent Office

Office européen
des brevets

**EUROPEAN SEARCH REPORT**

Application Number

EP 21 16 1152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALGHAMRI R ET AL: "Impregnation and encapsulation of lightweight aggregates for self-healing concrete", CONSTRUCTION AND BUILDING MATERIALS, ELSEVIER, NETHERLANDS, vol. 124, 10 August 2016 (2016-08-10), pages 910-921, XP029750937, ISSN: 0950-0618, DOI: 10.1016/J.CONBUILDMAT.2016.07.143 * the whole document * | 1-14 | INV. C04B20/10 |
| X | WO 2014/053699 A1 (TEKNOLOGIAN TUTKIMUSKESKUS VTT OY [FI]) 10 April 2014 (2014-04-10) * the whole document * | 1-14 | |
| A | JP 2013 103849 A (UNIV TOKYO; SUMITOMO OSAKA CEMENT CO LTD) 30 May 2013 (2013-05-30) * the whole document * | 1-14 | |
| A | CN 107 265 992 A (UNIV SHIJIAZHUANG TIEDAO; CHINA RAILWAY 19TH BEREAU GROUP CO LTD) 20 October 2017 (2017-10-20) * the whole document * | 1-14 | **TECHNICAL FIELDS SEARCHED (IPC)** C04B |

The present search report has been drawn up for all claims

| Place of search | Date of completion of the search | Examiner |
|---|---|---|
| Munich | 11 August 2021 | Roesky, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 1152

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2021

| Patent document cited in search report | | Publication date | Patent family member(s) | | Publication date |
|---|---|---|---|---|---|
| WO 2014053699 | A1 | 10-04-2014 | FI<br>WO | 124295 B<br>2014053699 A1 | 13-06-2014<br>10-04-2014 |
| JP 2013103849 | A | 30-05-2013 | JP<br>JP | 5856443 B2<br>2013103849 A | 09-02-2016<br>30-05-2013 |
| CN 107265992 | A | 20-10-2017 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG et al.** *Cement and Concrete Composites,* 2018, vol. 92, 216-229
- **KRISHNAPRIYA et al.** *Microbiological Research,* 2015, vol. 174, 48-55
- **QURESHI et al.** *Construction and building materials,* 2016, vol. 121, 629-643
- **HILLOULIN et al.** *Cement and Concrete Composites;,* 2015, vol. 55, 298-307
- **KANELLOPOULOS et al.** *Smart materials and Structures,* 2017, 26
- **MINNEBO et al.** *Materials,* 2017, vol. 10 (1), 49
- **LI et al.** *Materials & Design,* 2020, 190